# EUROPÄISCHE PATENTANMELDUNG

(11) **EP 0 899 166 A2**
(43) Veröffentlichungstag der Anmeldung: **03.03.1999**
(21) Anmeldenummer: 98116102.9
(22) Anmeldetag: 26.08.1998
(51) Int. Cl.: B60R 21/00

(54) **Anordnung mit einem Übertrager zum Ansteuern einer Auslösevorrichtung eines Rückhaltesystems für Fahrzeuginsassen**

(30) Priorität: 28.08.1997 DE 19737506
(71) Anmelder: SICAN, GESELLSCHAFT FÜR SILIZIUM-ANWENDUNGEN UND CAD/CAT NIEDERSACHSEN mbH, D-30419 Hannover (DE)
(72) Erfinder: Heeren, Heiner, 30890 Barsinghausen (DE); Rögner, Jörn, 26127 Oldenburg (DE)
(74) Vertreter: Gerstein, Hans Joachim

(57) **Zusammenfassung**

Herkömmliche Anordnungen haben an der Sekundärseite (5) des Übertragers (1) eine Auslösevorrichtung mit einer Zündimpedanz (3), einem Energiespeicher (4), der vor die Auslösevorrichtung geschaltet ist und von einem über den Übertrager (1) zugeführten Trägersignal gespeist wird, und eine Frequenzauswerteschaltung (7), welche als Reaktion auf eine zur Auslösung des Rückhaltesystems geänderte Frequenz des Trägersignals die Auslösevorrichtung durchschaltet.

Die Anordnung hat ein erstes Gatter (18) auf der Sekundärseite (5) zur Auslösung eines Impulses an den Übertrager (1), wenn das Trägersignal eine bestimmte Zeit empfangen wurde und die Zündimpedanz (3) einen vorgegebenen Wert hat. Es ist eine Strommeßschaltung (30) an der primärseitigen Spule (2a) des Übertragers (1) vorgesehen, wobei ein Ausfall der Auslösevorrichtung erkannt wird, wenn der gemessene Strom in einer bestimmten Zeit nicht über einen definierten Wert steigt.

Zur Airbag-Ansteuerung in Kraftfahrzeugen.

## Beschreibung

Die Erfindung betrifft eine Anordnung zum Ansteuern einer Auslösevorrichtung eines Rückhaltesystems für Fahrzeuginsassen mit einem Übertrager, an dessen Sekundärseite die Auslösevorrichtung angeschlossen ist. Das Rückhaltesystem kann z.B. ein in einem Lenkrad angeordneter Airbag sein.

Eine derartige Anordnung ist aus der DE-OS 195 39 070 bekannt. Das Rückhaltesystem ist im rotierenden Teil des Fahrzeugs, d.h. im Lenkrad angeordnet. Im stationären Teil, z.B. in der Lenksäule, befindet sich ein Steuergerät zur Auslösung einer Zündimpedanz des Rückhaltesystems. Die Übertragung der Steuerinformation und die zum Auslösen notwendige Energie erfolgt induktiv mit einem Übertrager. Zur Vermeidung einer ungewollten Auslösung werden nur geringe Energiemengen übertragen. Damit dennoch ausreichend Energie für die Zündimpedanz verfügbar ist, ist ein Energiespeicher im rotierenden Teil vorgesehen. Der Energiespeicher kann z.B. ein Kondensator sein.

Es ist vorgesehen, ein Wechselspannungssignal geringer Leistung kontinuierlich auf die Schaltung im rotierenden Teil zu übertragen. Die Wechselspannung wird gleichgerichtet und sorgt für eine konstante Energieversorgung. Zur Auslösung wird ein Triggersignal gesendet, das sich von dem Wechselspannungssignal z.B. durch eine andere Frequenz unterscheiden kann. Das Triggersignal wird von einer Steuerschaltung erkannt, welche einen Transistor zur Auslösung der Zündimpedanz schaltet.

Weiterhin überwacht die Steuerschaltung den Ladezustands des Kondensators und die Funktion der Auslösevorrichtung. Zur Kontrolle der Auslösevorrichtung wird der Widerstand der Zündimpedanz gemessen. Bei Überschreiten eines vorgegebenen Widerstandswertes wird ein Fehlersignal an das Steuergerät gesendet. Dies ist aber insofern nachteilig, als das Fehlersignal bei einem Schaltungsausfall im rotierenden Teil nicht gesendet wird, so daß weder der Schaltungsausfall noch ein Fehler an der Zündimpedanz erkannt wird.

In der DE-OS 195 30 586 A1 ist eine Anordnung zum Kontrollieren des Widerstandes einer an einem Übertrager sekundärseitig angeschlossenen Zündpille eines Airbags beschrieben. Eine Störung der Airbagfunktion kann anhand einer Änderung des Zündpillenwiderstandes erkannt werden. Zur Kontrolle wird daher eine stetig wiederkehrende Messung des Widerstandes durchgeführt. Bei der Messung an der Primärwicklung des Übertragers besteht jedoch kein eindeutiger Zusammenhang zwischen dem gemessenen Widerstand und dem Zündpillenwiderstand. Es wird vorgeschlagen, einen zusätzlichen Widerstand parallel zur Zündpille zu schalten.

Diese Schaltungsanordnung wird in der DE-OS 195 30 587 A1 dahingehend weiterentwickelt, daß der Meßwiderstand mit einem Schalter wahlweise hinzugeschaltet werden kann. Durch das Hinzuschalten des Widerstandes ändert sich der primärseitige Strom. Diese Stromänderung ist ein Maß für die Funktionsfähigkeit des Airbags und kann mit einem Schwellwertschalter ausgewertet werden.

In der DE-OS 195 30 588 A1 ist eine weitere Ausführung dieser Anordnung beschrieben, bei der zur Kontrolle der Zündimpedanz eine impulsförmige Kontroll-Spannung auf die Primärseite des Übertragers gegeben wird. Die Messung erfolgt durch Auswertung der Anstiegs- und/oder Abfallzeitkonstante der an dem Meßwiderstand abfallenden Meßspannung.

Das Problem bei diesen Schaltungsanordnungen besteht darin, daß die Meßspannnung mit den ebenfalls über die Primärseite des Übertragers auf die Sekundärseite übertragenen Signalen zur Steuerung und Auslösung des Airbags kollidiert.

Aufgabe der Erfindung war es, eine Anordnung zum Ansteuern einer Auslösevorrichtung eines Rückhaltesystems für Fahrzeuginsassen mit einem Übertrager anzugeben, wobei an der Sekundärseite des Übertragers eine Auslösevorrichtung mit einer Zündimpedanz, ein Energiespeicher, der vor die Auslösevorrichtung geschaltet ist und von einem über den Übertrager zugeführten Trägersignal gespeist wird, und eine Frequenzauswerteschaltung angeschlossen ist, welche als Reaktion auf eine zur Auslösung des Rückhaltesystems geänderte Frequenz des Trägersignals die Auslösevorrichtung durchschaltet. Die Anordnung sollte eine kontinuierliche Überwachung der Schaltung in dem rotierenden Teil ermöglichen und einfach aufgebaut und zuverlässig sein. Außerdem sollte die Informationsübertragung vom stationären zum rotierenden Teil ohne Kollision mit der Datenrückübertragung erfolgen.

Die Aufgabe wird durch die Anordnung nach Anspruch 1 gelöst.

Die sekundärseitige Schaltung des Übertragers im rotierenden Teil wird durch einen zweiten Energiespeicher versorgt, der von dem Trägersignal gespeist wird. Dadurch ist ein zuverlässiger Betrieb der Schaltung möglich. Ein dritter Energiespeicher, der ebenfalls von dem Trägersignal gespeist wird, ist mit einem Komparator verbunden, der durchschaltet, wenn der dritte Energiespeicher eine vorgegebene Menge Energie enthält. Weiterhin ist ein Vergleicher vorgesehen, der durchschaltet, wenn sowohl der Komparator durchgeschaltet ist, als auch die Zündimpedanz einen vorgegebenen Wert hat. Der Vergleicher steuert ein Schaltglied, das mit dem dritten Energiespeicher verbunden ist und diesen über den Übertrager entlädt. Die Übertragung erfolgt in der Sendelücke des Trägersignals.

Vorteilhafte Ausgestaltungen sind in den Unteransprüchen beschrieben.

### Ausführungsbeispiele:

Die Erfindung wird nachfolgend anhand der beigefügten Zeichnungen erläutert. Es zeigen:
- Fig. 1:: ein Blockdiagramm der Anordnung;
- Fig. 2:: die Schaltung in dem rotierenden Teil;
- Fig. 3:: die Schaltung in dem stationären Teil;
- Fig. 4:: ein Blockdiagramm der Anordnung für zusätzliche Steuerungsaufgaben.

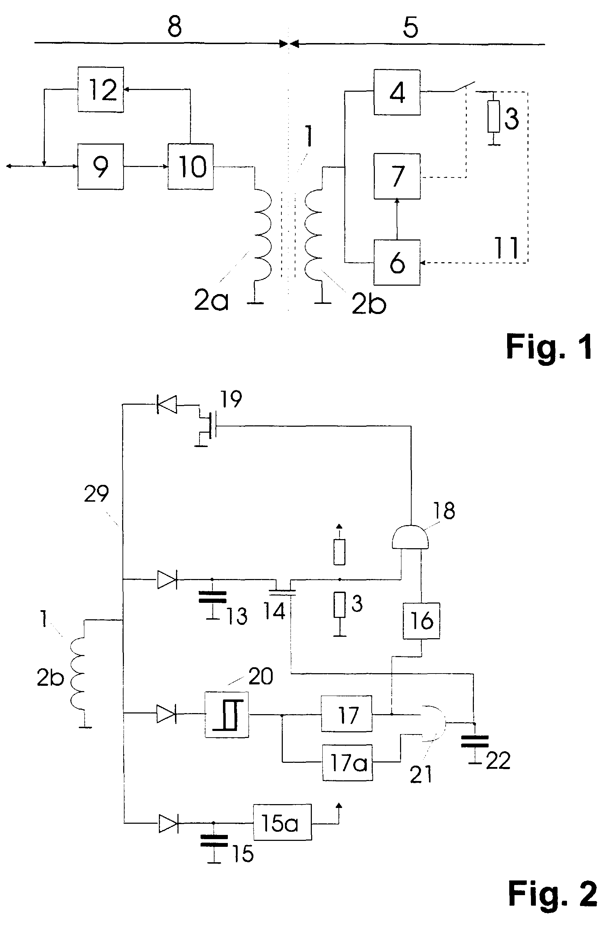

Die Figur 1 zeigt die Anordnung zum Ansteuern einer Auslösevorrichtung eines Rückhaltesystems im Blockdiagramm. Das Rückhaltesystem, z.B. ein Airbag, ist in einem rotierenden Teil, üblicherweise in dem Lenkrad des Fahrzeugs angebracht. Die Ansteuerung erfolgt durch eine Schaltung in dem stationären Teil des Fahrzeugs, z.B. in der Lenksäule. Die Energie- und Datenübertragung zwischen stationärem und rotierenden Teil erfolgt mit einem Übertrager 1, der aus zwei gegeneinander verdrehbaren Spulen 2a, 2b gebildet sein kann. Das Rückhaltesystem wird mit einer Zündimpedanz 3 ausgelöst, die üblicherweise ein Widerstand ist. Hierzu ist eine bestimmte Energiemenge erforderlich, die in einem ersten Energiespeicher 4, z.B. einem Kondensator, gespeichert ist. Auf der Sekundärseite 5 des Übertragers 1, im rotierenden Teil, ist eine sekundärseitige Sende-/Empfangsbaugruppe 6 vorgesehen, die ein Trägersignal empfängt. Es ist eine Frequenzauswerteschaltung 7 zur Erkennung von Frequenzänderungen vorgesehen, die das Rückhaltesystem auslöst, sobald das Trägersignal eine bestimmte Frequenz hat, die sich von der im Normalzustand gesendeten Frequenz unterscheidet. Auf der Primärseite 8 des Übertragers 1 ist ein Frequenzgenerator 9 zur Erzeugung des Trägersignals vorgesehen, wobei die Frequenz einstellbar ist. Das Trägersignal wird mit einer primärseitigen Sende-/Empfangsbaugruppe 10 auf den Übertrager 1 gegeben.

Zur Überwachung der Funktion des Rückhaltesystems wird ein Diagnosesignal 11 auf der Sekundärseite 5 erzeugt, das auf die Primärseite 8 rückgekoppelt und dort in einer Diagnoseschaltung 12 ausgewertet wird.

Die Schaltung an der sekundärseitigen Spule 2b des Übertragers 1 ist in der Figur 2 dargestellt. Ein erster Energiespeicher 13 speichert die übertragene Energie für die Auslösung des Rückhaltesystems. Im Auslösefall wird der erste Energiespeicher 13 mit einem ersten Transistor 14 auf die Zündimpedanz 3 geschaltet.

Ein zweiter Energiespeicher 15 nimmt die übertragene Energie des Ladestroms auf und stellt eine Versorgungsspannung für die sekundärseitige Schaltung zur Verfügung, die mit einem Spannungsregler 15a geregelt wird.

Weiterhin ist ein Integrator 16 vorgesehen, der die Zeitimpulse aus einem Zeitglied 17 zählt. Nach einer bestimmten Anzahl Impulse wird ein Signal an ein erstes Gatter 18 gegeben. Im Falle einer funktionsfähigen Zündimpedanz 3 wird ein zweiter Transistor 19 geschaltet und es erfolgt eine Impulsübertragung zur Primärseite 8.

Das Trägersignal wird in einem Signalumformer 20 umgeformt und gelangt in die Frequenzauswerteschaltung 7, die aus zwei unterschiedlichen, nacheinander ausgelösten Zeitgliedern 17, 17a und einem zweiten Gatter 21 besteht. Wird eine hohe Auslösefrequenz durch Überlappung beider Zeitglieder erkannt, wird ein erster Kondensator 22 aufgeladen, der ab einer bestimmten Ladespannung den ersten Transistor 14 zur Auslösung des Rückhaltesystems schaltet.

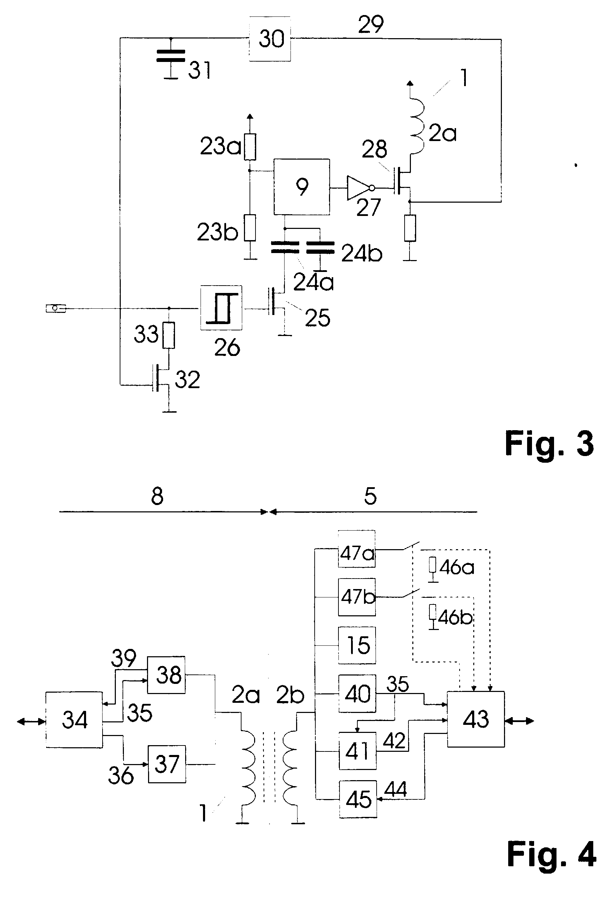

Die Figur 3 zeigt die Schaltung auf der Primärseite 8 des Übertragers 1. Das Trägersignal wird in dem Frequenzgenerator 9 erzeugt, der frequenzbestimmende externe Widerstände 23a, 23b und zweite Kondensatoren 24a, 24b hat. Der Kondensator 24a wird im Auslösefall mit einem Schalttransistor 25 abgeschaltet, so daß die erzeugte Frequenz zunimmt und den Auslösefall auf der Sekundärseite 5 signalisiert. Der Auslösefall wird von dem Diagnosesignal durch einen Komparator 26 unterschieden. Der Strom durch den Übertrager 1 wird mit einer Leistungsansteuerung 27 und einem dritten Transistor 28 gesteuert.

Das rückübertragene Signal 29 zur Diagnose gelangt auf eine Strommeßschaltung 30 am Primäranschluß 8 des Übertragers 1. Die Strommeßschaltung 30 erzeugt ein impulsförmiges Signal, das einen dritten Kondensator 31 auflädt. Bleiben die Rückantworten aus, so sinkt die Spannung an dem dritten Kondensator 31 und ein vierter Transistor 32 wird betätigt. Dadurch wird ein Widerstand 33 geschaltet und es wird ein Fehlersignal an eine externe Elektronik übermittelt.

In der Figur 4 ist eine besondere Ausführungsform dargestellt, die sowohl für das Auslösen eines Rückhaltesystems, als auch für zusätzliche Steuerungsaufgaben vorgesehen ist, die für intelligente Airbagsysteme oder Multifunktionslenkräder erforderlich sind.

Die Datenübertragung erfolgt im Halb-Duplex-Verfahren mit einer zeitversetzten Kommunikation.

Im stationären Teil ist ein Mikrocontroller 34 vorgesehen, der einen Zeittakt 35 und ein in der Frequenz variierendes Trägersignal 36 erzeugt. In der Sendezeit des stationären Teils werden mit einem Sender 37 frequenzcodierte Informationen durch das Trägersignal 36 übertragen. Aus diesen Informationen kann im rotierenden Teil der Takt, die Daten und Versorgungsenergie zurückgewonnen werden. In der Sendezeit für das rotierende Teil wird kein Trägersignal 36 erzeugt, sondern es wird das Signal des Übertragers 1 in einem Konverter 38 als Datenstrom 39 ausgewertet.

Das Trägersignal 36 hat zwei verschiedene Frequenzzustände für die übertragenen digitalen Informationen '0' und '1' und einen dritten Frequenzzustand für die Auslösung des Rückhaltesystems.

Die Taktrückgewinnung erfolgt in einer ersten Schaltung 40 und die Datenrückgewinnung in einer zweiten Schaltung 41, mit der die Frequenzzustände aus dem Trägersignal 36 ausgewertet werden. Die Daten 42 werden in einen zweiten Mikrocontroller 43 geleitet, wobei die Auslösefrequenz absolute Priorität vor den anderen Frequenzen hat, so daß das Rückhaltesystem umgehend ausgelöst wird. Zur Datenrückübertragung 44 ist eine Sendeschaltung 45 vorgesehen.

Intelligente Rückhaltesysteme haben mehrere Zündimpedanzen 46a und 46b, die einzeln ansteuerbar sind und jeweils einen eigenen Energiespeicher 47a und 47b haben.

### Bezugszeichen

- 1: Übertrager
- 2a, 2b: Spulen
- 3: Zündimpedanz
- 4: erster Energiespeicher
- 5: Sekundärseite
- 6: sekundärseitige Sende-/Empfangsbaugruppe
- 7: Frequenzauswerteschaltung
- 8: Primärseite
- 9: Frequenzgenerator
- 10: primärseitige Sende-/Empfangsbaugruppe
- 11: Diagnosesignal
- 12: Diagnoseschaltung
- 13: erster Energiespeicher
- 14: erster Transistor
- 15: zweiter Energiespeicher
- 15a: Spannungsregler
- 16: Integrator
- 17, 17a: Zeitglieder
- 18: erstes Gatter
- 19: zweiter Transistor
- 20: Signalumformer
- 2: 1 zweites Gatter
- 22: erster Kondensator
- 23a, 23b: externe Widerstände
- 24a, 24b: zweite Kondensatoren
- 25: Schalttransistor
- 26: Komparator
- 27: Leistungsansteuerung
- 28: dritter Transistor
- 29: rückübertragenes Signal
- 30: Strommeßschaltung
- 31: dritter Kondensator
- 32: vierter Transistor
- 33: Widerstand
- 34: erster Mikrocontroller
- 35: Zeittakt
- 36: Trägersignal
- 37: Sender
- 38: Konverter
- 39: Datenstrom
- 40: erste Schaltung
- 41: zweite Schaltung
- 42: Daten
- 43: zweiter Mikrocontroller
- 44: Datenrückübertragung
- 45: Sendeschaltung
- 46a, 46b: Zündimpedanzen
- 47a, 47b: Energiespeicher

## Patentansprüche

1. Anordnung zum Ansteuern einer Auslösevorrichtung eines Rückhaltesystems für Fahrzeuginsassen mit einem Übertrager (1), wobei an der Sekundärseite (5) des Übertragers (1) eine Auslösevorrichtung mit einer Zündimpedanz (3), ein erster Energiespeicher (4), der vor die Auslösevorrichtung geschaltet ist und von einem über den Übertrager (1) zugeführten Trägersignal gespeist wird, und eine Frequenzauswerteschaltung (7) angeschlossen ist, welche als Reaktion auf eine zur Auslösung des Rückhaltesystems geänderte Frequenz des Trägersignals die Auslösevorrichtung durchschaltet, **gekennzeichnet durch**
- ein erstes Gatter (18) auf der Sekundärseite (5) zur Auslösung eines Impulses an den Übertrager (1), wenn das Trägersignal eine bestimmte Zeit empfangen wurde und die Zündimpedanz (3) einen vorgegebenen Wert hat,
- eine Strommeßschaltung (30) an der primärseitigen Spule (2a) des Übertragers (1), wobei ein Ausfall der Auslösevorrichtung erkannt wird, wenn der gemessene Strom in einer bestimmten Zeit nicht über einen definierten Wert steigt.

2. Anordnung nach Anspruch 1, **gekennzeichnet durch**
- einen dritten Kondensator (31), der mit dem Ausgang der Strommeßschaltung (30) verbunden ist, und
- einen vierten Transistor (32), der mit dem Ausgang der Strommeßschaltung (30) verbunden ist, wobei der vierte Transistor (32) betätigt wird, wenn die Spannung an dem dritten Kondensator (31) auf einen bestimmten Wert sinkt.

3. Anordnung nach Anspruch 1, **dadurch gekennzeichnet,** daß die Frequenzauswerteschaltung (7) zwei unterschiedliche, parallelgeschaltete Zeitglieder (17, 17a) und ein nachfolgendes zweites Gatter (21) zum Vergleich der Ausgangssignale der Zeitglieder (17, 17a) hat, wobei bei einer Überlappung der Ausgangssignale der Zeitglieder (17, 17a) die Auslösung des Rückhaltesystems bewirkt wird.

4. Anordnung nach einem der vorhergehenden Ansprüche, **gekennzeichnet durch** einen zweiten Energiespeicher (15), der von dem Trägersignal gespeist wird und zur Versorgung der sekundärseitigen Schaltung des Übertragers (1) dient.

5. Anordnung nach einem der vorhergehenden Ansprüche, **dadurch gekennzeichnet,** daß das Trägersignal zwei verschiedene Frequenzzustände für die übertragenen digitalen Informationen und einen dritten Frequenzzustand für die Auslösung des Rückhaltesystems hat.
